# FASCICULE DE BREVET EUROPEEN

(11) **EP 1 938 442 B1**
(45) Date de publication et mention de la délivrance du brevet: **11.07.2012**
(21) Numéro de dépôt: 06831230.5
(22) Date de dépôt: 26.09.2006
(51) Int. Cl.: H02K 5/22, B23K 11/20

(54) **ASSEMBLAGE D'UNE TRESSE DE BALAI AVEC LE CAPOT METALLIQUE D'UNE MACHINE ELECTRIQUE TOURNANTE ET MACHINE ELECTRIQUE TOURNANTE COMPORTANT UN TEL ASSEMBLAGE**
KOMBINATION EINES BÜRSTENGEFLECHTS MIT EINER ELEKTRISCHEN DREHMASCHINENABDECKUNG UND ELEKTRISCHE DREHMASCHINE DAMIT
COMBINATION OF A BRUSH BRAID WITH A ROTATING ELECTRICAL MACHINE COVER AND ROTATING ELECTRICAL MACHINE COMPRISING SAME

(30) Priorité: 19.10.2005 FR 0510657
(43) Date de publication de la demande: 02.07.2008
(73) Titulaire: VALEO EQUIPEMENTS ELECTRIQUES MOTEUR, 94046 Créteil (FR)
(72) Inventeur: DROZDEK, Marius, F-38280 Villette d'Anthon (FR)
(74) Mandataire: Gamonal, Didier
(86) Numéro de dépôt international: PCT/FR2006/050943
(87) Numéro de publication internationale: WO 2007/045777

(56) Documents cités:
- FR-A- 2 630 273
- US-A- 3 648 014
- US-A- 4 853 568
- US-A1- 2001 007 401
- US-A1- 2002 112 340

## Description

### Domaine technique de l'invention

La présente invention concerne d'une manière générale les machines électriques tournantes, notamment les démarreurs de moteur thermique, comportant un capot métallique, un porte-balais, des balais montés coulissant dans le porte- balais et au moins un élément conducteur souple pour relier électriquement l'un des balais au capot.

L'invention se rapporte plus particulièrement à un assemblage de l'élément conducteur souple, solidaire d'un balai destiné à coopérer avec un collecteur d'une machine électrique tournante, avec un capot métallique.

L'invention se rapporte également à une machine électrique tournante comportant un tel assemblage

### Etat de la technique

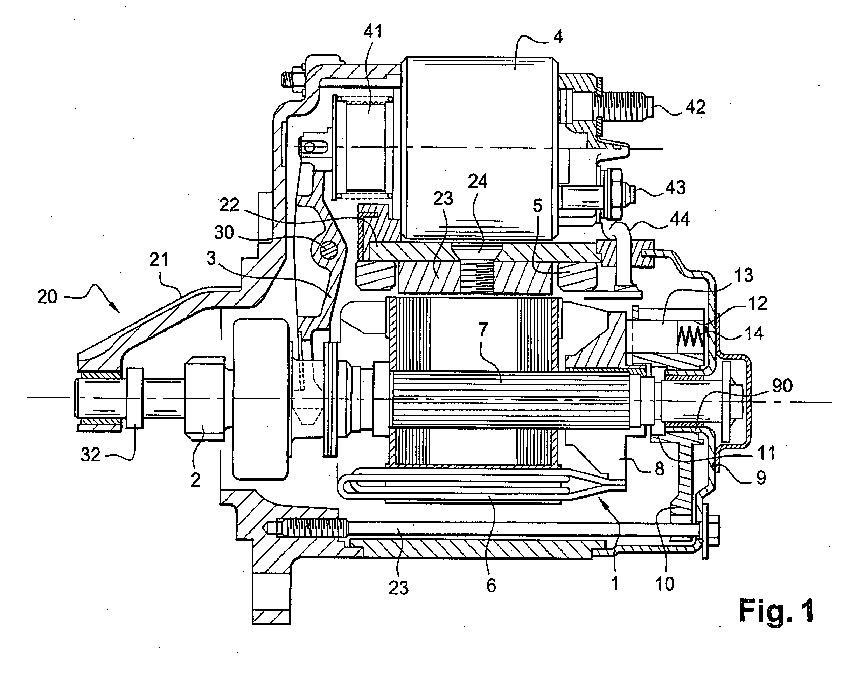

Sur la figure 1 on a représenté en coupe axiale un démarreur de moteur thermique, ici un démarreur de moteur thermique de véhicule automobile.

Ce démarreur comporte un moteur électrique 1, un lanceur 2, un levier de commande 3 et un contacteur 4 électromagnétique.

Le moteur électrique 1 comporte un stator inducteur comprenant un bobinage 5, un rotor induit comportant un bobinage 6, un arbre 7, un collecteur plat 8 à lames de contact frontales, un capot métallique 9 et un porte-balais 10.

Le stator inducteur comporte une culasse 22 métallique, de forme tubulaire, qui sert de support à au moins deux masses polaires 23 autour desquelles sont montés des enroulements reliés en série pour former le bobinage 5. Les masses 23 sont fixées à l'intérieur de la culasse 22 via des vis 24.

Le rotor induit comporte un corps (non référencé) sous la forme d'un paquet de tôles à encoches pour montage de segments conducteurs reliés aux lames de contact métalliques du collecteur 8. Ces segments constituent le bobinage 6.

Le collecteur 8 et le corps du rotor sont fixés sur l'arbre 7, ici moleté localement à cet effet. Le collecteur plat 8 est d'orientation transversale par rapport à l'axe de l'arbre 7 constituant l'axe du moteur électrique 1

Le capot 9 est ici métallique et est conformé pour constituer un palier arrière pour l'extrémité arrière de l'arbre 7. Ce capot 9 appartient à un carter 20 métallique comprenant un palier avant creux 21, ici en aluminium, et la culasse métallique 22 intercalée axialement entre le capot 9 et le palier avant 21.
Le palier 21 est configuré pour être monté sur une partie fixe du véhicule.
Des tirants 23, dont un seul est visible à la figure 1, servent à la fixation du capot 9 et de la culasse 22 au palier 21 taraudé à cet effet, le capot 9, ainsi que le porte-balais 10, présentant des trous de passage pour les tirants 23 montés à l'intérieur de la culasse 22 serrée entre le capot 9 et le palier 21.

Le porte-balais 10 est fixé au capot 9 à l'aide de vis (non représentées).

L'arbre 7 constitue ici l'arbre de sortie du démarreur en sorte que l'extrémité avant de l'arbre 7 est montée à rotation dans le palier avant 21 servant de logement au levier 3 monté à articulation sur un axe 30 porté ici par le palier 21. L'arbre 7 comporte à sa périphérie externe des cannelures hélicoïdales (non visibles) en prise des cannelures hélicoïdales complémentaires (non visibles) appartenant à la périphérie interne du lanceur 2 traversé par l'arbre 7.

Ce lanceur 2 comporte une gorge pour réception de l'extrémité inférieure en forme de fourche du levier 3, ainsi qu'un pignon (non référencé) destiné à engrener avec une couronne de démarrage (non représentée) reliée rigidement ou de manière élastique au vilebrequin du moteur thermique. Le support 21 présente à cet effet un passage pour la couronne de démarrage et sert également de support au contacteur 4.
L'arbre 7 porte également une butée 32 pour limiter le déplacement du lanceur 2. La butée 32 est adjacente au palier 21.

Le palier 21 et le capot 9 servent chacun de logement ici à un palier lisse pour montage à rotation de l'arbre 7.
Le capot 9 présente centralement à sa périphérie interne une douille 90 pour le montage du palier lisse associé, tel qu'un coussinet.

Le contacteur 4 comporte en son sein, un bobinage (non visible) comportant au moins un enroulement, un noyau fixe (non visible), un équipage mobile (non visible) comprenant une tige de commande portant un contact mobile, un noyau mobile 41 relié à articulation au levier 3 ainsi que des ressorts (non visibles) et des bornes de contact 42, 43 électriquement conductrices. L'une 42 des bornes est reliée électriquement à la borne positive de la batterie du véhicule et l'autre 43 au bobinage 5 du stator via un câble 44.

Le porte-balais 10 présente un corps en matière électriquement isolante, telle que de la matière plastique. Ce corps présente une ouverture centrale 11 traversée par l'arbre 7 et des logements 12.

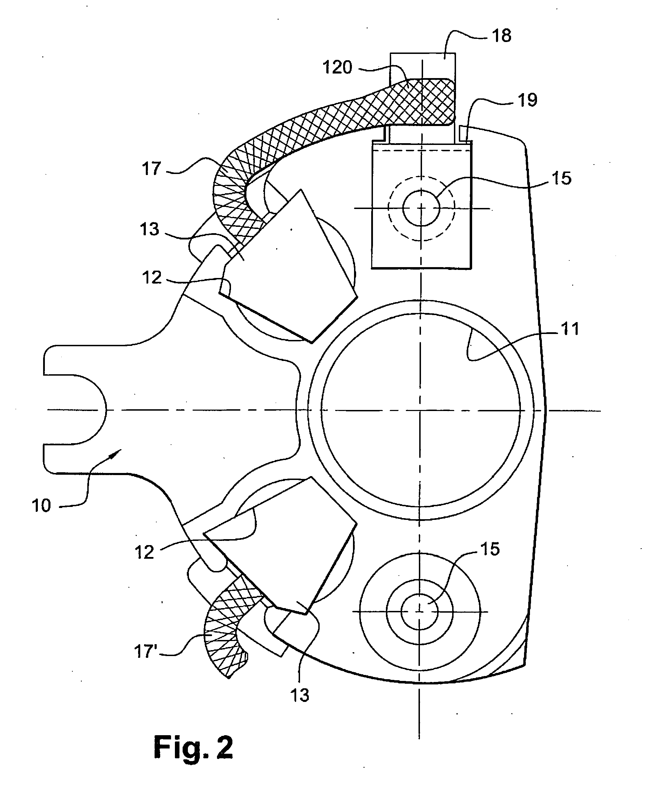

Comme visible à la figure 2, qui est une vue partielle de face du porte-balais, le corps du porte-balais présente des trous 15 pour sa fixation, par exemple à l'aide de vis (non représentées), sur le capot 9.

Chaque logement 12 sert de réceptacle à un balai 13 monté à coulissement axial dans ce logement. Chaque balai 13 est associé à un ressort 14. Il est prévu ici deux balais 13 et donc deux ressorts 14. Les balais 13 sont ici d'orientation axiale par rapport à l'axe de l'arbre 7.
Le ressort 14 de la figure 1 prend appui sur le capot 9 pour pousser son balai 13 contre les lames de contact conductrices du collecteur 8. L'autre ressort 14 (non visible) pend appui sur une pièce en matière électriquement isolante, intercalée entre le porte balais 10 et le capot 9 pour pousser son balai 13 contre les lames de contact conductrices du collecteur 8.
Les balais 13 sont donc destinés à coopérer avec le collecteur 8, plus précisément avec les lames conductrices de celui-ci portées par un corps du collecteur en matière électriquement isolante, telle que de la matière plastique.

L'un des balais 13 est solidaire d'un élément conducteur souple 17, ici une tresse métallique. Cette tresse 17 est dans l'exemple de réalisation en cuivre. Le logement correspondant 12 présente un passage pour la tresse 12.
Cette tresse 17 relie électriquement ce balai 13 au capot 9 ici via une cosse métallique 18 pincée entre le corps du porte-balais 10 et le capot 9.
Le corps du porte-balais comporte à cet effet une rainure 19 en forme de T pour montage de la cosse métallique glissée dans la rainure 19. La cosse 18 est traversée par l'une des vis d'assemblage du porte-balais au capot 9.
La tresse 17 est à l'une de ses extrémités liée électriquement et mécaniquement par soudage en 120 à la cosse 18 et est ici ancrée à l'autre de ses extrémités dans le balai.
A cet effet la cosse est avantageusement en cuivre ou en alliage de cuivre pour faciliter le soudage.

Une autre tresse 17' en cuivre, solidaire de l'autre balai 13, relie électriquement cet autre balai 13 à la sortie du bobinage 5 du stator, l'entrée du bobinage étant reliée de manière précitée via le câble 44 à la borne 43 du contacteur 4.
Les bobinages 5, 6 sont donc mis en série via les balais 13.
La tresse 17 soudée sur le capot 9 assure un retour à la masse via le carter métallique 20 et l'autre tresse 17' l'alimentation électrique de l'autre balai.

De manière connue, lorsque le bobinage du contacteur 4 est alimenté électriquement, suite par exemple à un actionnement de la clé de contact, il est engendré un champ magnétique qui déplace le noyau mobile 41 en direction du noyau fixe et des bornes 42, 43. Après rattrapage d'un jeu le noyau agit sur la tige de commande pour déplacer l'équipage, formé par ladite tige et le contact mobile, en direction des bornes 42, 43 et ce à l'encontre de la force exercée par un ressort de coupure non visible. Le noyau mobile 41 lors de son déplacement entraîne le levier 3, qui pivote autour de son axe 30 et déplace ainsi le lanceur 2 en direction de la butée 32.
Au bout d'une course déterminée le contact mobile vient en contact avec les bornes 42, 43 en sorte que le moteur électrique, alimenté électriquement alors via le câble 44, tourne et entraîne en rotation le pignon du lanceur pour démarrer le moteur thermique, le pignon engrenant alors avec la couronne de démarrage précitée.

Ce mode de réalisation, grâce à la présence de la cosse 18 en cuivre ou en alliage de cuivre, permet une liaison par soudage de la tresse en cuivre avec la cosse 18.

Le document FR2630273 A1 décrit un démarreur électrique comprenant un moteur électrique avec un balai négatif étant relié à l'extrémité d'un fil, dont l'autre extrémité est soudée sur la face interne du capot métallique réalisé en tôle, celui-ci étant relié à la masse du démarreur électrique par l'intermédiaire de ses colonnettes.

Il est souhaitable de supprimer la cosse pour réduire le nombre de pièces.
En outre il est également souhaitable de pouvoir réaliser la fixation mécanique et électrique de la tresse sur un capot présentant une température de fusion différente de celle de l'élément conducteur souple.

### Objet de l'invention

La présente invention à pour objet de répondre à ces souhaits.

Suivant l'invention un assemblage du type précité de l'élément conducteur souple, solidaire d'un balai destiné à coopérer avec le collecteur d'une machine électrique tournante, avec le capot métallique, dans lequel l'élément conducteur souple consiste en une tresse métallique, est caractérisé en ce que le capot est en une matière qui présente une température de fusion inférieure à celle de la tresse métallique et en ce que le capot comporte un bossage pour soudage de la tresse métallique sur le capot.

Suivant l'invention une machine électrique tournante du type précitée est caractérisée en ce qu'elle comporte un assemblage du type sus-indiqué.

Grâce à l'invention on peut souder électriquement la tresse métallique souple sur le capot en une matière présentant une température de fusion inférieure à celle de la tresse.
Lors du soudage la matière du bossage imprègne la tresse poreuse. C'est l'électrode de soudage qui sert d'élément presseur en sorte que la matière du bossage pénètre dans les interstices de la tresse métallique.

Dans un mode de réalisation le capot est à base d'aluminium.
Dans un autre mode de réalisation le capot est à base de magnésium.
Dans un mode de réalisation la tresse est en cuivre ou à base de cuivre.

La douille de montage du palier lisse est dans un mode de réalisation venue de moulage avec le capot.

Ce capot est dans un mode de réalisation étanche.

### Brève description des dessins

D'autres caractéristiques et avantages de l'invention apparaîtrons à la lumière de la description qui va suivre en regard des figures annexées dans lesquelles :
- la figure 1 est une vue en coupe axiale d'un démarreur de moteur thermique de l'art antérieur ;
- la figure 2 est une vue de face du porte-balais de la figure 1 ;
- la figure 3 est une vue partielle en coupe axiale d'un démarreur de moteur thermique de véhicule automobile équipé d'un capot selon l'invention ;
- la figure 4 des balais, des tresses, des ressorts et du coussinet équipant le démarreur de la figure 3 ;
- les figures 5 à 7 sont des vues du capot de la figure 3 lors des différentes phases de l'opération de soudage ;
- les figures 8 et 9 sont des vues en perspective de l'ensemble porte - balais- capot de la figure 3 ;
- la figure 10 est une vue de face correspondant aux figures 8 et 9.

### Description d'exemples de réalisation selon l'invention

Dans la description qui va suivre les éléments communs à l'invention et à l'art antérieur seront affectés des mêmes signes de référence.

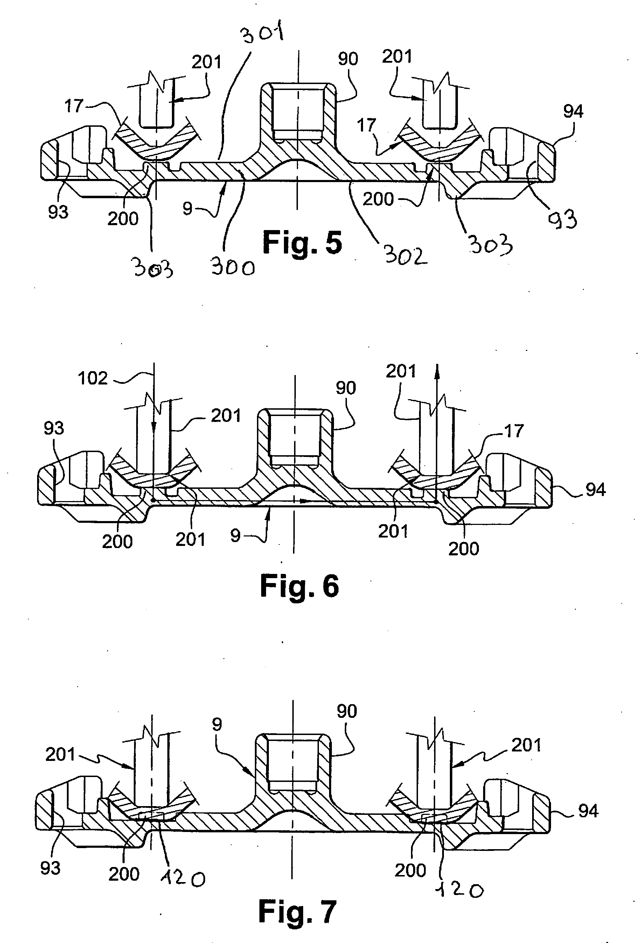

Ainsi dans les figures 5 à 7 on voit en 9 le capot et en 120 le soudage de deux tresses métalliques 17 sur le capot métallique 9.
Les tresses 17 sont reliées électriquement aux balais 13 concernés. Elles sont dans un mode de réalisation ancrées dans les balais 13 concernés.
Dans tous les modes de réalisation les tresses sont solidaires des balais concernés.
Ces tresses 17 sont souples et sont également appelées shunts.
Les tresses 17 sont pourvues d'interstices et sont donc poreuses.

Dans les modes de réalisation selon l'invention, contrairement au mode de réalisation de la figure 1, il n'est pas prévu de cosse en sorte que l'on réduit le nombre de pièces.
Dans les modes de réalisation selon l'invention on remplace le capot 9 en tôle de la figure 1 par un capot en une matière présentant une température de fusion inférieure à celle de la tresse métallique 17.

Le capot est dans un mode de réalisation à base d'aluminium et la tresse 17 en cuivre.
Dans un mode de réalisation de faibles quantités d'élément d'addition sont ajoutées à l'aluminium.
Dans un autre mode de réalisation le capot est en alliage d'aluminium.
En variante la tresse 17 est en alliage de cuivre.

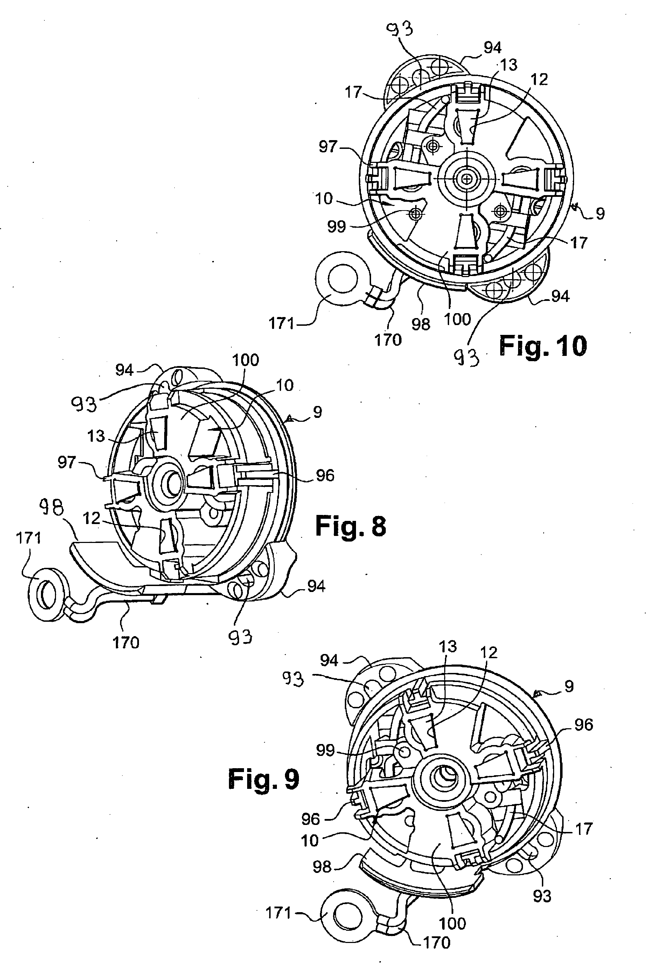

Dans le mode de réalisation représenté, le capot 9 à base d'aluminium présente des trous 93 pour le passage de deux tirants du type du tirant 27 de la figure 1. Le collecteur 8 est un collecteur plat d'orientation transversale par rapport à l'axe de l'arbre 7 et les balais 13 d'orientation axiale par rapport à cet axe comme à la figure 1.
Les trous 93 sont formés dans des oreilles 94 saillantes radialement que présente le capot 9 à sa périphérie externe comme visible également dans les figures 8 à 10.
Les tirants s'étendent ici à l'extérieur de la culasse du moteur électrique et non à l'intérieur de celle-ci comme à la figure 1.

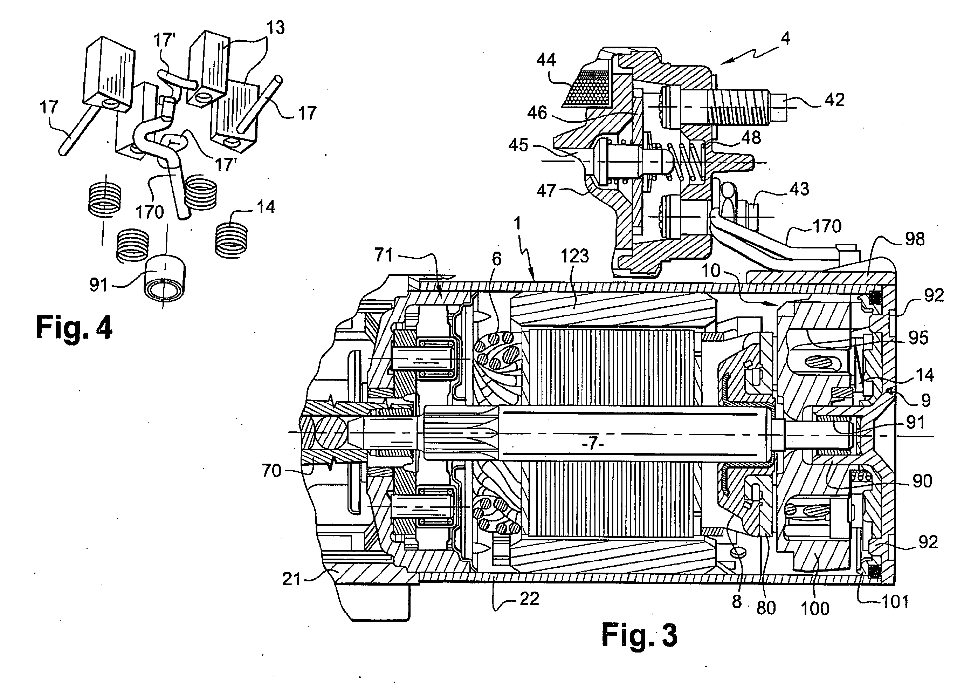

Le capot 9 à une forme annulaire comme mieux visible dans les figures 8 à 10 et ferme l'extrémité de la culasse 22 comme visible à la figure 3.

Le porte-balais 10 comporte dans ce mode de réalisation quatre balais 13 et donc quatre logements 12 et quatre ressorts 14 (voir figures 4 et 8 à 10).

Dans ce mode de réalisation on utilise un porte balais 10 en deux pièces 100 et 101 en matière isolante électriquement et moulable, ici en matière plastique. Ces pièces 100, 101 sont trouées centralement pour passage de la douille 90 et consistent en une pièce de guidage 100 des balais 13 et en une embase 101 servant d'appui aux ressorts 14.

La pièce 100 comporte donc ici quatre logements 12 pour les balais 13 répartis ici circonférentiellement de manière régulière.
Des espaces existent entre les logements 12 en forme de cage.

Comme visible à la figure 3, la pièce de guidage 100 comporte une fente borgne 95 au niveau de chaque logement 12 pour autoriser le passage et un mouvement de la tresse 17, 17' concernée en fonction de l'usure du balai 13 concerné. Cette pièce 100 est ici en une matière résistant à la chaleur, par exemple en matière plastique thermodurcissable.

L'embase 101 est ici en matière thermoplastique. Dans un mode de réalisation l'embase est avantageusement renforcée par des fibres, telles que des fibres de verre.

Cette embase est fixée au capot 9, constituant le palier arrière de l'arbre 7, dont l'axe constitue l'axe du moteur électrique 1.

Dans un mode de réalisation l'embase 101 comporte des pions traversant chacun un trou du capot. Ces pions sont destinés à être rivetés à chaud de manière étanche sur le capot 9.

Ici (Figure 3) c'est le capot 9 qui présente des pions 92 traversant chacun un trou associé (non référencé) réalisé dans le capot 9 ici à base d'aluminium. Ce capot 9 est donc dans cet exemple de réalisation métallique et en matière moulable.

La fixation de l'embase 101 sur le capot 9 en matière moulable est dans ce mode de réalisation effectuée par rivetage, les pions étant écrasés.
Selon une caractéristique ce capot 9 à base d'aluminium est donc étanche en sorte que l'on supprime la pièce centrale de fermeture de la figure 1.

Cela permet également d'obtenir directement par moulage la douille 90 servant au montage du palier lisse, ici un coussinet 91, de montage à rotation de l'extrémité arrière de l'arbre 7. Le coussinet 91 est emmanché à force dans la douille 90.
Les oreilles 94 sont également venues de moulage avec le capot 9. Ces oreilles 94 sont délimitées par un rebord de rigidification d'orientation axiale (voir figures 8 et 9) obtenu aisément par moulage.
Le capot 9 dans ce mode de réalisation est en une seule pièce et est donc économique et multifonctions.

Une rondelle de calage (non référencée) de calage de l'arbre 7 est montée dans le fond de la douille 90.
On notera que dans le mode de réalisation de la figure 3, l'arbre 7 ne constitue pas ici l'arbre de sortie 70. Dans ce mode de réalisation un réducteur de vitesse 71 est intercalé entre l'arbre 7 du moteur 1 et l'arbre de sortie 70, dont l'extrémité avant est montée à rotation dans le palier avant du carter comme à la figure 1.
Le réducteur de vitesse 71 consiste ici en un train épicycloïdal comprenant, de manière connu, un pignon formé sur l'extrémité avant de l'arbre 7, un porte-satellites solidaire de l'extrémité arrière de l'arbre 70 et une couronne fixe dentée intérieurement. Les satellites, montés à rotation autour d'axes solidaires du porte-satellites, engrènent avec le pignon solaire et avec la couronne dentée.

Dans cette figure 3 on n'a pas représenté entièrement le palier avant 21, le lanceur et le levier de commande et la partie avant du contacteur électromagnétique 4. Dans cette figure 3 on a par contre représenté partiellement la partie arrière du contacteur 4.
Ainsi on voit en 44 le bobinage du contacteur, en 47 le noyau fixe, en 45 la tige de commande, en 46 le contact mobile et en 48 le ressort de coupure.

Deux des balais 13 sont reliés électriquement par les tresses 17' à la borne 42 d'alimentation électrique du bobinage 6.
Pour ce faire les deux tresses 17' sont regroupées à leurs extrémités en 170 pour être reliées électriquement à un oeillet 171 se fixant sur la borne 42.
Les tresses 17' sont solidaires à leur autre extrémité du balai 13 concerné.

On notera que l'embase présente à sa périphérie externe (figures 8 à 10) quatre pattes 96 d'orientation axiale à raison de une patte par logement 12. Ces pattes sont dirigées vers la pièce de guidage 100, qui présente des glissières 97 en forme de U pour réception des pattes 96 en forme de T.
Chaque extrémité libre d'une patte 96 est configurée en forme de crochet (non visible) pour coopérer avec un épaulement (non visible) saillant dans la glissière 97.

L'assemblage de la pièce de guidage 100 avec l'embase 101 en matière plus souple que la pièce de guidage 100 plus résistante à la chaleur est ainsi réalisé par encliquetage.

On voit dans ces figures en 98 la pièce, dénommée passe fil, destinée aux passage des tresses 17' regroupées en 170 après traversée de cette pièce 98. On notera également que l'embase 101 présente des plots non référencés à la figure 3, pour le centrage des ressorts 14. Cette embase présente également des pions de guidage 99 engagés chacun dans une ouverture non référencé de la pièce de guidage 100 des balais 13, ici de forme trapézoïdale.

Un problème se pose au niveau de la tresse 17 car il faut réaliser une liaison mécanique et électrique entre deux matières possédant des températures de fusion différentes.
Par exemple, de manière précitée, le capot 9 est à base d'aluminium et la tresse 17 à base de cuivre.
Ainsi qu'on le sait la température de fusion de l'aluminium est de l'ordre de 625 à 700° et celle d'une tresse en cuivre de l'ordre de 1080°.

Cette différence de température de fusion ne permet pas de bien mélanger les deux matières.
Une soudure autogène n'est également pas possible.
Un brasage à l'aide d'un alliage plus fusible que l'aluminium et le cuivre est aussi impossible.
Il est souhaitable de ne pas réaliser la liaison mécanique et électrique de la tresse avec le capot à l'aide d'organes de fixation supplémentaires, tels que des vis ou des rivets pour notamment diminuer le nombre de pièces à stocker.

La solution selon l'invention fait appel à un capot en une matière qui présente une température de fusion inférieure à celle de la tresse métallique 17, ce capot étant doté, suivant une caractéristique de l'invention, d'un bossage 200 de soudage de la tresse 17.

Ce bossage 200 est venu de moulage avec le capot 9, qui dans un mode de réalisation est de manière précitée à base d'aluminium c'est-à-dire en matière moulable.
Bien entendu le nombre de bossages dépend des applications. Dans le cas du mode de réalisation de la figure 1 on remplace le capot 9 par exemple par un capot à base d'aluminium et on dote ce capot d'un unique bossage.

Dans le mode de réalisation des figures 3 à 10 on dote le capot 9 à base d'aluminium de deux bossages 200. Ces bossages 200 sont implantés à la faveur de deux dégagements, ici diamétralement opposés, existant chacun entre deux logements 12 consécutifs (voir figures 9 et 10).

Dans une première étape (figure 5) on rapproche deux électrodes de soudage 201 des extrémités à souder des tresses 17 posées sur leur bossage associé 200.
Ces électrodes appartiennent à un dispositif de soudage électrique faisant intervenir un courant électrique traversant les électrodes via le capot.

Dans une deuxième étape (figure 6) on accoste les électrodes 201 au capot 9 pour pincer les extrémités des tresses 17, dénudées au moins à ce niveau, entre les électrodes 201 et les bossages 200. Les tresses sont donc pressées par les électrodes 201, qui compactent ainsi les tresses 17 en diminuant leur épaisseur.
Le passage d'un fort courant électrique 102 dans les électrodes 201 permet de réaliser la liaison des deux tresses 17, appelées également shunts, au capot 9 et donc à la masse.
Plus précisément le courant électrique 102 arrive par l'une des électrodes 201, puis traverse le capot électriquement conducteur et ressort via l'autre électrode.
Ainsi lors du passage du courant électrique 102 à travers les deux électrodes 201 et le capot 9, comme représenté par des flèches à la figure 6, l'aluminium des bossages 100 fond, devient liquide et pénètre à l'intérieur des tresses 17. La tresse 17 ne fond pas lors de l'opération de soudage, l'intensité du courant électrique de soudage étant déterminée en conséquence.

Le ou les électrodes 201 écrasent les tresses non compactées et permet une fusion de l'aluminium, qui imprègne les tresses, l'aluminium étant chassée vers l'extérieur.
Les liaisons électriques et mécaniques sont donc réalisées simultanément au moyen des deux électrodes 201, ici de section circulaire.

On tire partie de la porosité de la tresse 17, qui permet une imprégnation de l'aluminium.
Suivant une caractéristique après soudage la tresse est imprégnée d'aluminium, c'est à dire par la matière du capot provenant notamment du bossage 200.

On diminue l'épaisseur des bossages 200 lors de l'opération de soudage (figure 7).

La tresse est après l'opération de soudage figée dans l'aluminium.
Cette tresse est en final, au niveau du bossage 200,
imprégnée par la matière du capot 9.
L'invention tire partie de la porosité de la tresse et de la différence de température de fusion entre le capot et la tresse.

Il ressort de la description que la taille du bossage 200 est déterminée en fonction de la taille et de la forme de l'électrode servant à souder électriquement par pression la tresse sur son bossage associé du capot.

Bien entendu la présente invention n'est pas limitée aux exemples de réalisation décrits.

Par exemple des éléments d'adition, tels que le silicium, le cuivre, le magnésium ou le zinc peuvent être ajoutés au capot en aluminium, sachant que le silicium améliore la coulabilité et la soudabilité, tandis que le cuivre le zinc ou le magnésium augmentent les caractéristiques mécaniques.
On peut également ajouter du nickel et une faible quantité de fer.
Le capot 9 est dans un autre mode de réalisation à base de magnésium de très faible densité qui fond vers 650°.
Comme élément d'addition on peut ajouter de l'aluminium, qui accroît la coulabilité et la résistance mécanique, le zinc ou le manganèse.

Bien entendu le démarreur peut être pourvu ou non d'un réducteur de vitesse.

Le démarreur est dans un mode de réalisation configuré en sorte que le pignon du lanceur soit implanté à l'extérieur du palier avant.

Le contacteur en variante est porté par le capot en matière moulable.

Ce contacteur est dans un mode de réalisation coaxial au moteur électrique en étant implanté à l'avant de celui-ci. La présence du levier de commande n'est donc pas indispensable.

En variante la machine électrique tournante est un moteur électrique.

Le nombre de balais et de tresses dépend des applications.

Dans un autre mode de réalisation les balais sont de manière connue d'orientation transversale, c'est-à-dire radiale par rapport à l'axe de l'arbre 7 du moteur électrique, tandis que le collecteur avec ses lames électriquement conductrices est d'orientation axiale par rapport à cet axe.

Dans tous les cas les balais 13 sont destinés à coopérer avec le collecteur 8. Plus précisément les balais 13 sont destinés à frotter sur les lames conductrices du collecteur 8 sous l'action des ressorts 14.
Chaque balai 13 associé à une tresse 17 est relié à la masse via le capot.
Chaque balai 13 associé à une tresse 17' est relié à une source d'alimentation électrique, dans les figures 1 et 3 via le contacteur 4.

Les balais 13, sollicités par les ressorts 14, forment avec leur tresse associée 17, 17' un équipage mobile en fonction de l'usure des balais.
L'équipage 13, 17 est attelé mécaniquement et électriquement au capot 9 par imprégnation de la tresse par la matière venant du capot.

On appréciera que le capot 9, abstraction faite des trous 93, est étanche et ferme de manière étanche la culasse 22, comme visible à la figure 3.
Ce capot 9 est évidé autour de chaque bossage 200 comme visible dans les figures 5 à 7. Plus précisément la face supérieure de chaque bossage 200 est ici dans le même plan que la face supérieure 301du voile central 300 (figure 5) du capot portant la douille 90. Cela permet de ne pas augmenter l'encombrement axial.

Bien entendu en variante le bossage s'étend en saillie par rapport à la face 301. On appréciera que les oreilles 94 rigidifient le capot 9, ces oreilles 94 comportant une protubérance de matière 303 par rapport à la face inférieure 302 du capot 9 comme visible à la figure 5.

## Revendications

1. Assemblage d'un l'élément conducteur souple (17), solidaire d'un balai (13) destiné à coopérer avec un collecteur (8) d'une machine électrique tournante, avec un capot métallique (9), dans lequel l'élément conducteur souple (17) consiste en une tresse métallique, est **caractérisé en ce que** le capot (9) est en une matière qui présente une température de fusion inférieure à celle de la tresse métallique (17) et **en ce que** le capot comporte un bossage (200) pour soudage de la tresse métallique sur le capot.

2. Assemblage selon la revendication 1, **caractérisé en ce que** le capot (9) est évidé autour du bossage (200).

3. Assemblage selon la revendication 1 ou 2, **caractérisé en ce que** le capot (9) est à base d'aluminium.

4. Assemblage selon la revendication 1 ou 2, **caractérisé en ce que** le capot (9) est à base de magnésium.

5. Assemblage selon l'une quelconque des revendications 1 à 4, **caractérisé en ce que** la tresse (17) est en cuivre ou à base de cuivre.

6. Assemblage selon l'une quelconque des revendications précédentes, **caractérisé en ce que** le capot (9) présente une douille (90) venue de moulage pour montage d'un palier lisse, tel qu'un coussinet (91) pour montage à rotation d'un arbre de la machine électrique tournante.

7. Assemblage selon l'une quelconque des revendications précédentes, **caractérisé en ce que** le capot (9) présente des pions saillants (92) pour fixation d'une embase (101) appartenant à un porte-balais (10).

8. Assemblage selon l'une quelconque des revendications précédentes, **caractérisé en ce que** le capot (9) est étanche.

9. Assemblage selon l'une quelconque des revendications précédentes, **caractérisé en ce que** le capot (9) comporte deux bossages (200) de soudage pour soudage de deux tresses métalliques (17).

10. Assemblage selon l'une quelconque des revendications précédentes, **caractérisé en ce que** la taille de ou des bossages (200) est déterminée en fonction de la taille et de la forme de l'électrode (201) servant à souder électriquement par pression la tresse (17) sur son bossage associé (200) du capot (9).

11. Assemblage selon la revendication 10, **caractérisé en ce que** chaque balai (13) est monté à coulissement dans un logement (12) et **en ce que** les bossages (200) sont implantés à la faveur de deux dégagements existant chacun entre deux logements (12) consécutifs.

12. Assemblage selon l'une quelconque des revendications précédentes, **caractérisé en ce que** la tresse (17), au niveau du bossage de soudage (200), est imprégnée par la matière du capot (9).

13. Machine électrique tournante, notamment un démarreur de moteur thermique, comportant un capot métallique (9), un porte-balais (10), des balais (13) montés coulissant dans le porte- balais (10) et au moins un élément conducteur souple (17) pour relier électriquement l'un des balais (13) au capot (9), **caractérisé en ce que** l'élément conducteur souple (17) et le capot (9) appartiennent à un assemblage selon l'une quelconque des revendications précédentes.

## Claims

1. Assembly of a flexible conductive element (17), attached to a brush (13) intended to cooperate with a collector (8) of a rotating electrical machine, with a metal cover (9), in which the flexible conductive element (17) consists of a metal braid, is **characterized in that** the cover (9) is made of a material which has a melting temperature lower than that of the metal braid (17) and **in that** the cover includes a boss (200) for welding the metal braid to the cover.

2. Assembly according to Claim 1, **characterized in that** the cover (9) is hollowed around the boss (200).

3. Assembly according to Claim 1 or 2, **characterized in that** the cover (9) is aluminium based.

4. Assembly according to Claim 1 or 2, **characterized in that** the cover (9) is magnesium based.

5. Assembly according to any one of Claims 1 to 4, **characterized in that** the braid (17) is made of copper or copper based.

6. Assembly according to any one of the preceding claims, **characterized in that** the cover (9) has a bushing (90) formed by moulding fitting a journal bearing, such as a bearing bush (91) for mounting a shaft of the rotating electrical machine so that it can rotate.

7. Assembly according to any one of the preceding claims, **characterized in that** cover (9) has protruding pins (92) for fixing a base (101) belonging to a brush-holder (10).

8. Assembly according to any one of the preceding claims, **characterized in that** the cover (9) is leak-tight.

9. Assembly according to any one of the preceding claims, **characterized in that** the cover (9) includes two welding bosses (200) for welding two metal braids (17).

10. Assembly according to any one of the preceding claims, **characterized in that** the size of the boss(es) (200) is determined according to the size and the shape of the electrode (201) used to electrically pressure weld the braid (17) onto its associated boss (200) of the cover (9).

11. Assembly according to Claim 10, **characterized in that** each brush (13) is mounted to slide in a recess (12) and **in that** the bosses (200) are located with the help of two undercuts each existing between two consecutive recesses (12).

12. Assembly according to any one of the preceding claims, **characterized in that** the braid (17), at the level of the welding boss (200), is impregnated with the material of the cover (9).

13. Rotating electrical machine, notably a heat engine starter, comprising a metal cover (9), a brush-holder (10), brushes (13) mounted to slide in the brush-holder (10) and at least one flexible conductive element (17) for electrically linking one of the brushes (13) to the cover (9), **characterized in that** the flexible conductive element (17) and the cover (9) belong to an assembly according to any one of the preceding claims.

## Patentansprüche

1. Zusammenbau eines elastischen Leiterelements (17), das fest mit einer Bürste (13) verbunden ist, die dazu bestimmt ist, mit einem Kollektor (8) einer drehenden elektrischen Maschine zusammenzuwirken, mit einer metallischen Kappe (9), wobei das elastische Leiterelement (17) aus einem Metallgeflecht besteht, **dadurch gekennzeichnet, dass** die Kappe (9) aus einem Material ist, das eine geringere Schmelztemperatur als das Metallgeflecht (17) hat, und dass die Kappe einen Buckel (200) zum Schweißen des Metallgeflechts an die Kappe aufweist.

2. Zusammenbau nach Anspruch 1, **dadurch gekennzeichnet, dass** die Kappe (9) um die Wölbung (200) herum ausgehöhlt ist.

3. Zusammenbau nach Anspruch 1 oder 2, **dadurch gekennzeichnet, dass** die Kappe (9) auf der Basis von Aluminium ist.

4. Zusammenbau nach Anspruch 1 oder 2, **dadurch gekennzeichnet, dass** die Kappe (9) auf der Basis von Magnesium ist.

5. Zusammenbau nach einem der Ansprüche 1 bis 4, **dadurch gekennzeichnet, dass** das Geflecht (17) aus Kupfer oder auf der Basis von Kupfer ist.

6. Zusammenbau nach einem der vorhergehenden Ansprüche, **dadurch gekennzeichnet, dass** die Kappe (9) eine mit ihr geformte Büchse (90) zum Einbau eines Gleitlagers, wie eines Achslagers (91), zum drehbaren Einbau einer Welle der drehenden elektrischen Maschine aufweist.

7. Zusammenbau nach einem der vorhergehenden Ansprüche, **dadurch gekennzeichnet, dass** die Kappe (9) vorstehende Zapfen (92) zur Befestigung eines zu einem Bürstenträger (10) gehörenden Sockels (101) aufweist.

8. Zusammenbau nach einem der vorhergehenden Ansprüche, **dadurch gekennzeichnet, dass** die Kappe (9) dicht ist.

9. Zusammenbau nach einem der vorhergehenden Ansprüche, **dadurch gekennzeichnet, dass** die Kappe (9) zwei Schweißbuckel (200) zum Schweißen von zwei Metallgeflechten (17) aufweist.

10. Zusammenbau nach einem der vorhergehenden Ansprüche, **dadurch gekennzeichnet, dass** die Größe des Buckels oder der Buckel (200) abhängig von der Größe und der Form der Elektrode (201) bestimmt wird, die dazu dient, das Geflecht (17) auf seinen zugeordneten Buckel (200) der Kappe (9) elektrisch druckzuschweißen.

11. Zusammenbau nach Anspruch 10, **dadurch gekennzeichnet, dass** jede Bürste (13) gleitend in eine Aufnahme (12) eingebaut ist, und dass die Buckel (200) dank zwei Freiräumen eingebaut werden, die je zwischen zwei aufeinanderfolgenden Aufnahmen (12) vorhanden sind.

12. Zusammenbau nach einem der vorhergehenden Ansprüche, **dadurch gekennzeichnet, dass** das Geflecht (17) im Bereich seines Schweißbuckels (200) vom Material der Kappe (9) durchdrungen wird.

13. Drehende elektrische Maschine, insbesondere ein Starter eines Verbrennungsmotors, die eine metallische Kappe (9), einen Bürstenträger (10), Bürsten (13), die im Bürstenträger (10) gleitend montiert sind, und mindestens ein elastisches Leiterelement (17) aufweist, um eine der Bürsten (13) elektrisch mit der Kappe (9) zu verbinden, **dadurch gekennzeichnet, dass** das elastische Leiterelement (17) und die Kappe (9) zu einem Zusammenbau nach einem der vorhergehenden Ansprüche gehören.
